(19) Europäisches Patentamt
European Patent Office
Office européen des brevets

(11) EP 0 722 879 B1

# (12) EUROPEAN PATENT SPECIFICATION

(45) Date of publication and mention
of the grant of the patent:
**17.11.1999 Bulletin 1999/46**

(51) Int. Cl.⁶: **B62D 7/14**

(21) Application number: **96100651.7**

(22) Date of filing: **17.01.1996**

(54) **Automotive vehicle having a rear steering actuator located frontwards of the rear end of its differential gear**

Kraftfahrzeug mit einem Hinterradlenkungs-Servomotor, der vor dem hinteren Ende seines Differentials liegt

Véhicule automobile comportant un actionneur de direction arrière positionné en avant de la partie arrière de son différentiel

(84) Designated Contracting States:
**DE FR GB**

(30) Priority: **19.01.1995 JP 621095**

(43) Date of publication of application:
**24.07.1996 Bulletin 1996/30**

(73) Proprietor:
**TOYOTA JIDOSHA KABUSHIKI KAISHA**
**Aichi-ken 471-8571 (JP)**

(72) Inventors:
• **Goto, Takeshi**
 **Toyota-shi, Aichi-ken (JP)**
• **Hiraiwa, Nobuo**
 **Toyota-shi, Aichi-ken (JP)**

(74) Representative:
**Winter, Brandl, Fürniss, Hübner, Röss,**
**Kaiser, Polte, Kindermann**
**Partnerschaft**
**Patent- und Rechtsanwaltskanzlei**
**Alois-Steinecker-Strasse 22**
**85354 Freising (DE)**

(56) References cited:
 **EP-A- 0 376 457**     **EP-A- 0 393 419**
 **DE-A- 4 111 799**     **FR-A- 2 584 668**
 **FR-A- 2 605 280**

 • **PATENT ABSTRACTS OF JAPAN vol. 13, no. 67**
 **(M-798), 15 February 1989 -& JP 63 269781 A**
 **(MAZDA), 8 November 1988,**

## Description

## BACKGROUND OF THE INVENTION

Field of the Invention

The present invention relates in general to an automotive vehicle equipped with a rear steering device, and more particularly to an improvement in mounting or installation of an actuator of the rear steering device on the body of the vehicle.

Discussion of the Prior Art

There is known an automotive vehicle capable of steering the rear wheels. This type of automotive vehicle is generally adapted such that a left and a right wheel are driven by a drive torque which is produced by an engine and distributed thereto through a differential gear, and are steered by a rear steering device which includes a rear steering mechanism and a rear steering actuator for operating the rear steering mechanism.

Conventionally, the rear steering actuator is mounted on the vehicle such that the actuator is spaced rearwards away from a vertical plane which extends in the lateral or transverse direction of the vehicle, passing the rear end of the differential gear. An example of the conventional vehicle in which the rear steering actuator is mounted as described above is disclosed in JP-A-2-99463 as a passenger car. In this car, the differential gear and a rear suspension mechanism are mounted on a sub-frame which is separate from and attached to an underbody of the vehicle body. The sub-frame has a pair of substantially parallel cross members, and is mounted on the vehicle body such that the two cross members are positioned on the respective front and rear sides of the differential gear. In the car, the rear steering actuator is attached to the rear one of the two cross members.

Where the rear steering actuator is mounted on the rear side of the differential gear as in the prior art car described above, there is a problem as described below.

In a motor vehicle, generally, a muffler which receives exhaust gases from an engine is also disposed on the rear side of the differential gear. Therefore, the rear steering actuator is disposed near the muffler, and is exposed to a heat transferred from the muffler as a heat source. Accordingly, the rear steering actuator should be sufficiently protected against a thermal damage due to such heat.

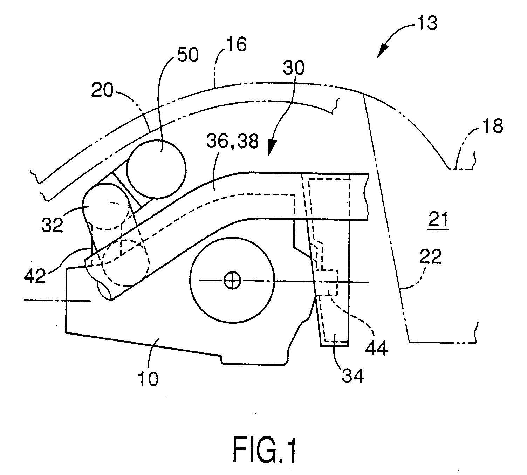

On the other hand, the differential gear provided on the motor vehicle is generally disposed in a space below the underbody, such that the front and rear portions of the differential gear are located under a center floor and a rear floor of the underbody, respectively. For more detail on the center and rear floors, reference is made to Fig. 1 showing a preferred embodiment of the invention. It is also noted that the rear floor has a downwardly recessed portion known as a spare tire pan (as shown in Fig. 1), which serves as a house or space for accommodating a spare tire.

In such known motor vehicle as disclosed in the above-identified publication, the rear steering actuator is mounted on the vehicle body, on the rear side of the differential gear, more specifically, in a space ("differential rear space") between the rear end of the differential gear and the spare tire pan. This differential rear space for accommodating the rear steering actuator should have a considerably large volume. Accordingly, the volume of a space ("differential front space") between the front end of the differential gear and the center floor should be accordingly reduced. To enlarge the differential front space, the center floor should be shifted in the forward direction of the vehicle, and a space for the passengers' compartment is inevitably reduced. Thus, where the rear steering actuator is disposed in the differential rear space, it is difficult to provide a sufficiently large space for the passengers' compartment. In other words, the mounting of the rear steering actuator on the rear side of the rear steering actuator and the provision of a sufficiently ample passengers' compartment are not compatible to a satisfactory extent.

Document JP-A-63269781 discloses a four-wheel steering device for a vehicle having a differential gear for distributing the drive torque of an engine to left and right rear wheels, and a rear steering device including a rear steering mechanism for changing a steering angle of said left and right rear wheels and a rear steering actuator for operating said rear steering mechanism, wherein said rear steering actuator is disposed in a portion of a space between an underbody of the vehicle and said differential gear, which portion is spaced frontwards away from a vertical plane which extends in a lateral direction of the vehicle and which passes a rear end of said differential gear.

From Document DE-A-4111799 there is known an actuator for causing a steering movement of the rear wheels of a vehicle, wherein the actuator comprises a drive shaft that can be moved in axial direction by an electric motor and a speed reducing gear (in the form of two planetary gears). In greater detail, the actuator is defined as to comprise a hollow cylindrical casing, an axially moveable drive shaft coaxially disposed with the hollow cylindrical casing, a motor coaxially disposed within the hollow cylindrical casing, and including a hollow rotating member, which has a center bore through which the drive shaft coaxially extends, and a motion converting mechanism coaxially disposed within the hollow cylindrical casing.

In document EP-A-393419 there is disclosed a vehicle having a steering means for a rear axle. The vehicle comprises an axle gear for distributing the drive torque of an engine to left and right rear wheels, and a rear steering device including a rear steering mechanism for changing a steering angle of said left and right rear wheels and a rear steering actuator for operating said rear steering mechanism, wherein said rear steering actuator is disposed in a portion of a space frontwards away from a vertical plane which extends in a lateral direction of the vehicle and which passes a rear end of said differential gear 38. The drive shaft of the rear steering actuator is connected to a strut rod the end portions of which are connected with tie rods for moving the rear wheels.

SUMMARY OF THE INVENTION

It is therefore the object of the present invention to provide an automotive vehicle wherein the passengers' compartment has a sufficiently ample space while the rear steering actuator is free from the thermal damage.

This object is solved by the present invention as defined in claim 1.

In the automotive vehicle of the present invention, the rear steering actuator is disposed in a portion of a space between the underbody of the vehicle and the differential gear, which portion is spaced frontwards away from the vertical plane which extends in the vehicle lateral direction and passes the rear end of the differential gear. Namely, the position of installation of the rear steering actuator on the present vehicle is shifted frontwards from the position of installation of the rear steering actuator on the conventional vehicle. Accordingly, the rear steering actuator on the present vehicle is spaced a considerable distance away from the muffler, which is generally disposed on the rear side of the differential gear.

It will be understood from the above description that the rear steering actuator which is spaced a considerable distance away from the muffler is less likely to be adversely influenced by heat generated from the muffler as a heat source. Accordingly, the components conventionally required to protect the rear steering actuator against thermal damage due to the heat can be at least partially eliminated, whereby the cost and size of the rear steering device can be advantageously reduced.

The term "underbody" is generally interpreted to mean a floor of a passengers' compartment and a luggage compartment of the vehicle, in general. The underbody may or may not be provided with a frame attached thereto. The frame may be an integral body consisting of a front portion and a rear portion corresponding to the front wheels and the rear wheels of the vehicle. Alternatively, the frame may include mutually separate or independent sub-frames, one of which may be used to mount the rear steering actuator.

Furthermore, in the case of the present invention, where the center of the rear steering actuator as viewed in the lateral direction of the vehicle is offset from the differential gear in the lateral direction, the rear steering actuator may be located within the length of the differential gear in the longitudinal direction of the vehicle. That is, the longitudinal space provided for the differential gear is sufficient for accommodating the rear steering actuator extending in the vehicle lateral direction between the underbody and the differential gear. Thus, the longitudinal space between the underbody and the differential gear is effectively utilized.

The rear steering actuator may be attached to the differential gear, or any other component such as one of the above-indicated sub-frames attached to the underbody.

The rear steering actuator may be of an electrically operated type wherein the drive shaft is driven by an electric motor or other means operated by electric power. Alternatively, the rear steering actuator may be of a pressure operated type wherein the drive shaft is driven by a pressure which is supplied from a suitable pressure source and electromagnetically controlled by a solenoid-operated valve device, for example.

According to a first preferred form of the present invention, the rear steering actuator comprises: a motor having a rotating member; an axially movable drive shaft; and a motion converting mechanism for converting a rotary motion of the rotating member of the motor into a linear motion of the drive shaft. In this case, the rotating member of the motor, the drive shaft and the motion converting mechanism are disposed coaxially with each other and rotatable about a common axis, and the rear steering actuator is disposed such that the common axis extends in the lateral direction of the vehicle.

In this type of the rear steering actuator, the rotating member of the motor and the drive shaft which are coaxial with each other may be axially spaced apart from each other, or may overlap each other in the axial direction. In the latter case, the drive shaft may extend through the rotating member of the motor, for example.

In the automotive vehicle according to the above-indicated first preferred form of this invention, the rear steering actuator is of a coaxial type wherein the rotating member of the motor, the drive shaft and the motion converting mechanism are coaxial with each other having a common axis of rotation. Accordingly, the size of the present rear steering actuator in the direction perpendicular to the common axis can be made considerably smaller than the size of the conventional rear steering actuator wherein the rotating member of the motor is disposed in parallel with each other with some distance between their axes of rotation in the radial direction of the drive shaft or rotating member.

The vehicle according to the above preferred form of the invention has a further advantage. That is, since the rear steering actuator is disposed such that the common axis extends in the lateral direction of the vehicle, the rear steering actuator can be disposed in a comparatively narrow space between the underbody and the differential gear, which narrow space has a comparatively small dimension in the longitudinal direction of the vehicle. Consequently, the rear steering actuator, which may be disposed above or in front of the differential gear, does not significantly reduce the space for the passengers' compartment. On some conventional types of vehicles, a rear steering device cannot be provided because the installation of its actuator considerably sacrifices the space of the passengers' compartment. According to the present preferred form of the invention, the rear steering device including the laterally extending coaxial type actuator can be easily installed on such conventional types of vehicles.

According to a second preferred form of the present invention, the portion of the space in which the rear steering actuator is disposed is located between the two vertical planes which extend in the lateral direction of the vehicle and which pass the front and rear ends of the differential gear, respectively.

According to a third preferred form of the invention, the vehicle further comprises a rear suspension mechanism, and a sub-frame which is separate from and attached to the underbody and to which the differential gear and the rear suspension mechanism are attached. In this case, the sub-frame includes a front cross member which is located at a position corresponding to a front portion of the differential gear, and the rear steering actuator is attached to the cross member.

According to a fourth preferred form of the invention, the rear steering actuator comprises: a motor having a rotating member; an axially movable drive shaft; and a motion converting mechanism for converting a rotary motion of the rotating member of the motor into a linear motion of the drive shaft, and the rotating member, the drive shaft and the motion converting mechanism are disposed coaxially with each other and rotatable about a common axis. In this instance, the rear steering actuator, the underbody, the sub-frame and the rear suspension member are positioned relative to each other so as to permit the rear steering actuator to be dismounted from the vehicle, without removal of the differential gear and the sub-frame from the vehicle, by moving the actuator in the lateral direction of the vehicle through a space between the underbody and the sub-frame, after removal of the actuator from the sub-frame.

In a fifth preferred form of the invention, the rear steering actuator comprises: (a) a hollow cylindrical casing; (b) an axially movable drive shaft disposed coaxially with the hollow cylindrical casing so as to extend therethrough; (c) a motor coaxially disposed within the hollow cylindrical casing, and including a hollow rotating member which has a center bore through which the drive shaft coaxially extends; and (d) a motion converting mechanism coaxially disposed within the hollow cylindrical casing, for converting a rotary motion of the rotating member into a linear motion of the drive shaft.

In one advantageous arrangement of the above fifth preferred form of the invention, the rear steering actuator further comprises a speed reducing device interposed between the motor and the motion converting mechanism in an axial direction of the drive shaft, for reducing a speed of the rotary motion of the rotating member of the motor when the rotary motion is transmitted to the motion converting mechanism.

In another advantageous arrangement of the fifth preferred form of the invention, the motor comprises a rotor as the rotating member, and a stator disposed coaxially with the rotor, the drive shaft extending coaxially through the rotor and stator. The rotor and the stator which are coaxial with each other may be axially spaced apart from each other, or may overlap each other in the axial direction. In the latter case, the rotor may extend through the stator, for example.

In a further advantageous arrangement of the fifth preferred form of the invention, the motion converting mechanism comprises an external thread formed coaxially with the drive shaft, and a nut which is rotatably and axially immovably supported by and within the hollow cylindrical casing and which engages the external thread and is coaxially connected to the rotating member of the motor.

Where the speed reducing device as described is provided, the speed reducing device may comprise at least one planetary gear speed reducer each of which includes a centrally disposed sun gear, at least three planetary gears which are disposed outwardly of the sun gear and which engage the sun gear, and a carrier which supports the at least three planetary gears such that each of the planetary gears is rotatable about an axis thereof while the planetary gears maintain a predetermined relative position in a circumferential direction of the carrier. In this case, the rotating member of the motor is coaxially connected to the sun gear while the motion converting mechanism is coaxially connected to the carrier.

In the above case, two planetary gear speed reducers may be provided in series connection with each other. That is, the two planetary gear speed reducers consist of an input side speed reducer whose sun gear receives the rotary motion of the rotating member of the motor, and an output side speed reducer whose sun gear receives a rotary motion of the carrier of the input side speed reducer. The output side speed reducer is adapted to transmit a rotary motion of its carrier to the motion converting mechanism.

## BRIEF DESCRIPTION OF THE DRAWINGS

The above and optional objects, features, advantages, and technical and industrial significance of the present invention will be better understood by reading the following detailed description, when considered in connection with the accompanying drawings, in which:

Fig. 1 is a fragmentary side elevational view of an automotive vehicle equipped with a rear steering device including a rear steering actuator, according to one embodiment of the present invention;

Fig. 2 is a plan view of the vehicle of Fig. 1;

Fig. 3 is a plan view of a sub-frame of the vehicle of Figs. 1 and 2;

Fig. 4 is a front elevational view in enlargement of the rear steering actuator of the vehicle of Figs. 1 and 2;

Fig. 5 is a block diagram illustrating an electric control system for the rear steering actuator; and

Fig. 6 is a flow chart illustrating a rear steering angle control routine executed according to a control program stored in a read-only memory of the control system of Fig. 5.

## DETAILED DESCRIPTION OF THE PREFERRED EMBODIMENT

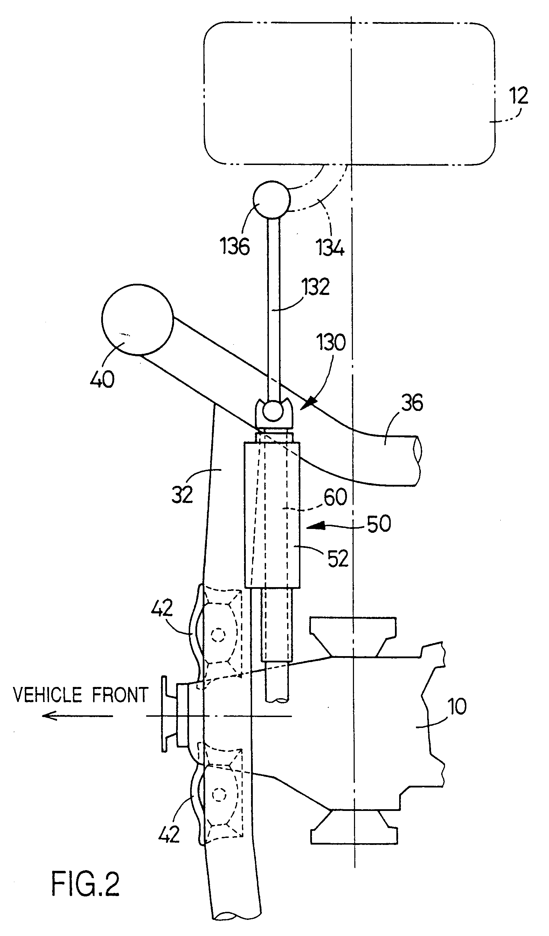

Referring first to the side elevational view of Fig. 1 and the plan view of Fig. 2, there are shown a differential gear and a rear steering device mounted on a rear-drive four-wheel automotive vehicle. The differential gear and the rear steering device are both provided for left and right rear wheels.

In Figs. 1 and 2, reference numeral 10 denotes the differential gear, which receives a drive torque from an engine through a transmission and a propeller shaft. The drive torque is distributed by the differential gear 10 to the left and right rear wheels 12 (Fig. 2), whereby the rear wheels 12 are driven. The differential gear 10 allows the two rear wheels 12 to rotate at different speeds. The differential gear 10 is mounted on an underbody 13 of the vehicle body.

The underbody 13 includes a front floor (not shown), a center floor 16 and a rear floor 18. The front floor extends in the longitudinal or running direction of the vehicle and constitutes a floor of a passengers' compartment. The center floor 16 extends rearwards from the rear end of the front floor, and are curved along wheel house arches 20 located above the rear wheels 12. The rear floor 18 extends rearwards from the rear end of the center floor 16, and has a downwardly recessed portion which serves as a spare tire pan 22 defining a spare tire house 21 for accommodating a spare tire. Below the center floor 16 and in front of the spare tire pan 22, there is provided a space in which the differential gear 10 is disposed.

The differential gear 10 is attached to the underbody 13, not directly thereto but through a sub-frame 30.

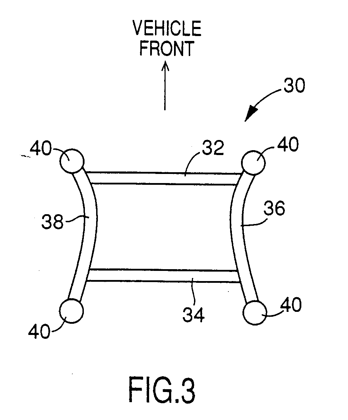

The sub-frame 30 is shown in Fig. 3. As is apparent from this figure, the sub-frame 30 consists of a pair of parallel cross members 32, 34, and a pair of side rails 36, 38 which are connected to the cross members 32, 34 such that the side rails 36, 38 are generally perpendicular to the cross members 32, 34. The side rails 36, 38 extend in parallel with each other as seen in Fig. 1.

As shown in Figs. 1 and 3, the sub-frame 30 is mounted on the underbody 13 such that the cross member 32 is spaced frontwards from the other cross member 34 in the longitudinal direction of the vehicle. In this sense, the cross members 32 and 34 can be referred to as "front cross member" and "rear cross member", respectively. The sub-frame 30 is elastically or flexibly attached to the underbody 13 through mount cushions 40, while the differential gear 10 is elastically or flexibly attached to the sub-frame 30 through mount cushions 42, 44. A right and a left rear suspension mechanism (not shown) are attached to respective right and left portions of the sub-frame 30.

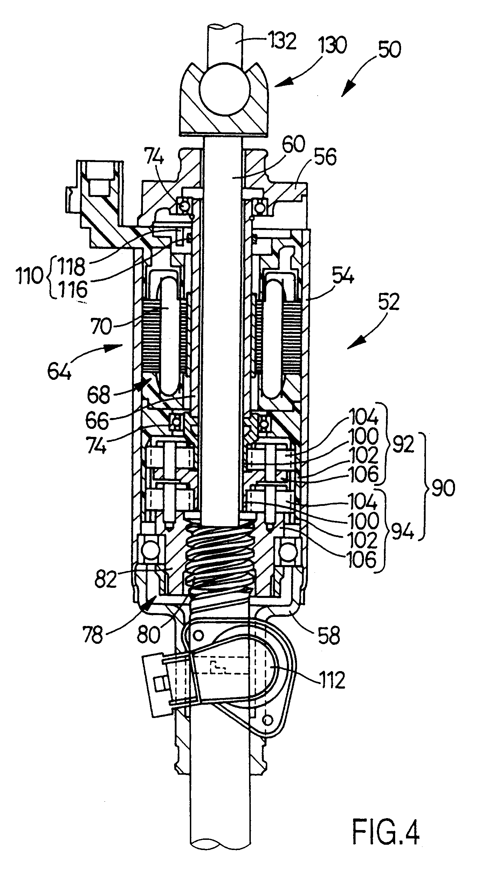

To the front cross member 32, there is attached a rear steering actuator 50 which constitutes a part of the rear steering device. Details of this rear steering actuator 50 are shown in the cross sectional view of Fig. 4.

The rear steering actuator 50 has a hollow cylindrical casing 52, which includes a main body 54 that is a thin-walled cylinder such as a straight pipe having a suitable constant diameter. The cylindrical casing 52 further includes a pair of end closure members 56, 58 which close the opposite open ends of the main body 54. the rear steering actuator 50 has a drive shaft 60 which extends through the cylindrical casing 52 in a concentric or coaxial relation therewith. Described more specifically, the drive shaft 60 is positioned by the two end closure members 56, 58 in coaxial relation with the casing 52, and is axially slidably movable relative to the end closure members 56, 58. The drive shaft 60 is splined to the end closure member 56 so that rotation of the drive shaft 60 relative to the casing 52 is prevented by the end closure member 56.

The cylindrical casing 52 accommodates a brushless motor 64 (which will be referred to simply as "motor 64"). The motor 64 includes a rotor 66 and a stator 68 both in the form of sleeves, which are disposed coaxially with each other such that the rotor 66 is positioned radially inwardly of the stator 68 and such that the length of the rotor 66 covers the entire length of the stator 68. The rotor 66 is of a three-pole type having four permanent magnets, which are arranged in the circumferential direction of the rotor 66, such that the polarities of the magnets are alternately N and S in the circumferential direction. On the other hand, the stator 68 is of a three-phase type having armature coils 70, which are arranged in the circumferential direction of the stator 68 such that the polarities of the coils 70 are alternately N and S in the circumferential direction. The stator 68 is disposed outwardly of the rotor 66, with a suitable amount of magnetic gap therebetween. The drive shaft 60 extends through a center bore of the rotor 66 in coaxial relation therewith, with a suitable amount of gap between the outer circumferential surface of the drive shaft 60 and the inner circumferential surface of the center bore of the rotor 66. The rotor 66 is rotatably and axially immovably supported at its opposite end portions by a pair of bearings 74 fitted in the casing 52. In operation of the motor 64, the rotor 66 is rotated by energization of the armature coils 70 of the stator 68.

The brushless motor 64 may be replaced by a motor with a brush. Further, the rotor 66 may have three or less permanent magnets, or five or more permanent magnets.

A rotary motion of the motor 64 is converted into a linear motion by a motion converting mechanism in the form of a screw mechanism 78, so that the drive shaft 60 is axially moved. The screw mechanism 78 includes an external thread 80 formed on the outer circumferential surface of a portion of the drive shaft 60, and an internal thread in the form of a nut 82 engaging the external thread 80. The nut 82 is rotatably and axially immovably supported by the cylindrical casing 52. In the present embodiment, the external thread 80 and the nut 82 of the screw mechanism 78 are both trapezoidal threads.

In the present embodiment, the rotary motion of the motor 64 is not transmitted directly to the screw mechanism 78, but is transmitted thereto through a speed reducing device 90, which functions to boosts the force of the rotary motion.

The speed reducing device 90 includes two planetary gear speed reducers 92, 94 connected in series.

Like a planetary gear set as well known in the art, each of the planetary gear speed reducers 92, 94 includes (a) a sun gear 100, (b) a ring gear 102, (c) a plurality of planetary gears 104 interposed between the sun gear 100 and ring gear 102, and (d) a carrier 106 which support the planetary gears 104 while maintaining a predetermined relative position of these gears 104 such that the planetary gears 104 are rotatable about their axes.

The two ring gears 102 are fixed to the casing 52. The two sun gears 100 are hollow members, and the drive shaft 60 coaxially extends through these sun gears 100, whereby the two planetary gear speed reducers 92, 94 are arranged in the axial direction of the drive shaft 60. The planetary gear speed reducer 92 on the side of the rotor 66 will be referred to as "input side speed reducer 92, while the planetary gear speed reducer 94 on the side of the screw mechanism 78 will be referred to as "output side speed reducer". In the input side speed reducer 92, the sun gear 100 is connected to the rotor 66 for rotation therewith. In the output side speed reducer 94, the sun gear 100 is connected to the carrier 106 of the input side speed reducer 92 for rotation therewith. The carrier 106 of the output side speed reducer 94 is connected to the nut 82 for rotation therewith.

In the rear steering actuator 50 constructed as described above, a rotary motion of the rotor 66 causes rotary motions of the sun gear 100 and planetary gear 104 of the input side speed reducer 92. The rotary motion of the sun gear 100 of the input side speed reducer 92 is transferred, with speed reduction, to the carrier 106 of the output side speed reducer 94. In the output side speed reducer 94, the rotary motion of the carrier 106 causes rotary motions of the sun gear 100 and planetary gear 104, and the rotary motion of the sun gear 100 is transferred, with speed reduction, to the carrier 106. As a result, the nut 82 is rotated by the carrier 106 of the output side speed reducer 94, and the rotary motion of the nut 82 is converted by the screw mechanism 78 into a linear motion of the drive shaft 60 in the axial direction.

In the rear steering actuator 50, there are provided a rotary position sensor 110 for detecting the angular position of the rotor 66, and an axial position sensor 112 for detecting the axial position of the drive shaft 60.

The rotary position sensor 110 is of a magnetic type (one form of non-contact type), consisting of a permanent magnet 116 rotating with the rotor 66, and three stationary magnetic detector elements 118. The detector elements 118 are disposed adjacent to the permanent magnet 116, and generates pulse signals whose levels change as the permanent magnet 116 passes the detector elements 118. The angular position of the rotor 66 relative to the stator 68 is detected on the basis of the generated pulse signals. The magnetic detector elements 118 may be Hall elements. The rotary position sensor 110 is used to confirm that the amount of rotation of the motor 64 is equal to a commanded value during operation of the rear steering actuator 50.

On the other hand, the axial position sensor 112 is of a potentiometer type (contact type). In the present embodiment, the axial position sensor 112 consists of a slider which is linearly displaced with the drive shaft 60, and a stationary electric resistor. The electric resistor is held in contact with the slider. The electric resistance of the resistor changes as the slider is displaced. The resistor generates a signal representative of its resistance, which represents the axial position of the drive shaft 60. The axial position sensor 112 is used to detect the zero or initial position (angular position) of the motor 64 before the motor 64 is operated to move the drive shaft 60 to control the rear steering angle.

The rear steering actuator 50 of the coaxial type constructed as described above is disposed in a space between the center floor 16 and the differential gear 10, more precisely, in a portion of the above-indicated space which is spaced frontwards away from a vertical plane which extends in the lateral or transverse direction of the vehicle and which passes the rear end of the differential gear 10, as indicated in Fig. 1. Described more specifically, the rear steering actuator 50 is mounted on the front cross member 32 of the sub-frame 30, such that the drive shaft 60 extends in the lateral direction of the vehicle. That is, the common axis of the mutually coaxially disposed drive shaft 60, rotor 66 and screw mechanism 78 extends in the lateral direction of the vehicle.

As shown in the plan view of Fig. 2, the axial center of the rear steering actuator 50 is offset by a suitable distance with respect to the differential gear 10 in the lateral direction of the vehicle. Further, the rear steering actuator 50 is located within the length of the differential gear 10 in the longitudinal direction of the vehicle. Therefore, the dimension of the space accommodating the differential gear 10 in the longitudinal direction of the vehicle is sufficient to accommodate the rear steering actuator 50, more precisely, sufficient to accommodate the diameter of the actuator 50. In other words, the actuator 50 can be accommodated in the space between the center floor 16 and the differential gear 10, and it is not necessary to provide a space behind or in front of the differential gear 10 for accommodating the actuator 50. Accordingly, it is not necessary to reduce the space for the passengers' compartment for mounting the actuator 50 on the vehicle body.

As also shown in Fig. 2, the opposite end portions of the drive shaft 60 of the rear steering actuator 50 are exposed outside the casing 52, and are connected to respective tie rods 132 through universal joints 130. In Fig. 2, only one universal joint 130 and only one tie rod 132 are shown. Each tie rod 132 is disposed coaxially with the drive shaft 60, and is connected to a knuckle arm 134 of the corresponding rear wheel 12 through a universal joint 136. In the present embodiment, the tie rods 132, universal joints 130, 136 and knuckle arms 134 constitute the rear steering mechanism, which cooperates with the rear steering actuator to constitute the rear steering device for changing the steering angle of the rear wheels 12.

It will be understood from the above explanation of the present embodiment that the rear steering actuator 50 is disposed at a position corresponding to a relatively front portion of the differential gear 10 as viewed in the longitudinal or running direction of the vehicle, whereby the actuator 50 is spaced a sufficient distance from the muffler which is heated by hot exhaust gases received from the vehicle engine. Consequently, the present arrangement is effective to reduce the number of components required to protect the actuator 50 against thermal damage due to the heat of the muffler, and is effective to lower the cost for protection of the actuator 50.

Further, the actuator 50 disposed according to the principle of the present invention is not opposed or exposed directly to the road surface, since the actuator 50 is located above the differential gear 10. In this arrangement, the actuator 50 is protected by the differential gear 10, against damage or contamination due to collision with flying pebblestone, or exposure to splashing mud or water, during running of the vehicle. Accordingly, the reliability of the actuator 50 is improved.

In the present embodiment, the rear steering actuator 50 of the coaxial type takes the form of a cylinder having a relatively small diameter, and is disposed in a space between the underbody 13 and the differential gear 10, that is, in a comparatively narrow space above the differential gear 10, which space is conventionally a dead space. Unlike a conventional vehicle in which the rear steering actuator is located behind the differential gear, the spaces for the passengers' compartment and luggage compartment would not be reduced in the present vehicle.

It is also noted that the actuator 50 can be removed from the vehicle body, without having to remove the sub-frame 30 from the underbody 13, or removing the tie rods 132 from the actuator 50. Accordingly, the actuator 50 can be easily inspected and serviced. This aspect will be described in detail.

To remove the rear steering actuator 50 from the vehicle body, the vehicle body is first jacked up at its rear portion, in particular, until the right and left rear suspension mechanisms are in a fully rebounded or released state, so that spaces extending in the longitudinal direction of the vehicle are created between the suspension mechanisms and the wheel house arches 20. Then, the left and right wheels 12 are removed from the rear axles. In this condition, the tie rods 132 are disconnected from the knuckle arms 134, and then the rear steering actuator 50 is removed from the front cross member 32 of the sub-frame 30. Then, the actuator 50 is dismounted together with the die rods 132 from the vehicle body, by moving the actuator 50 with the tie rods 132 in a selected one of the opposite laterally outward direction, through spaces extending in the longitudinal direction of the vehicle between the left and right side rails 36, 38 of the sub-frame 30 and the corresponding side members of the underbody 13, and spaces extending also in the longitudinal direction between the left and right suspension mechanisms and the wheel house arches 20.

Thus, the present vehicle is arranged to permit the rear steering actuator 50 to be removed from the vehicle body, together with the tie rods 132, without having to remove the sub-frame 30 from the underbody 13. This arrangement facilitates maintenance and inspection of the rear steering actuator 50.

While the mechanical arrangement of the rear steering device has been described in detail, its electrical arrangement will be described in detail.

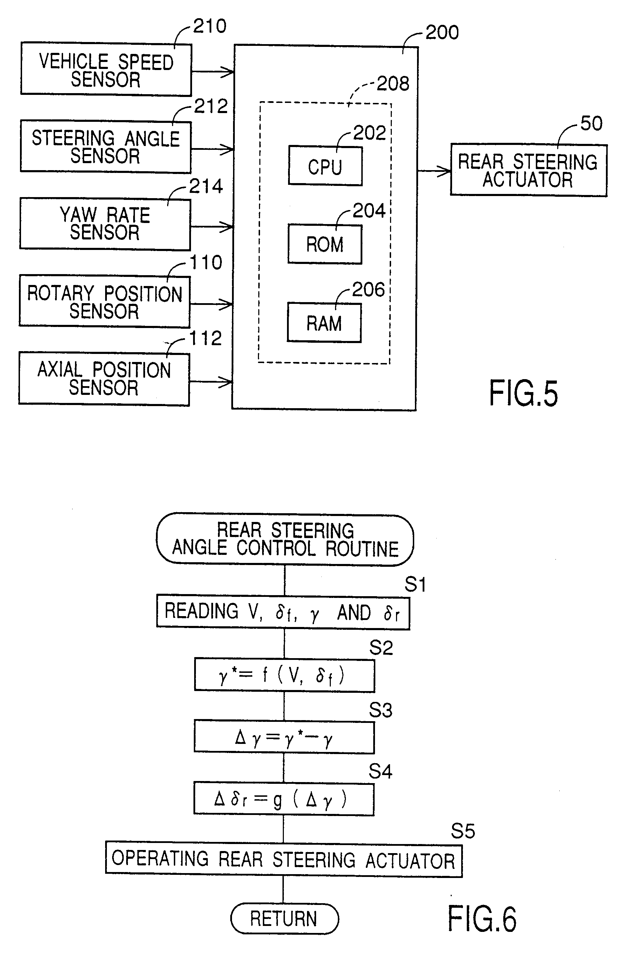

The rear steering device is equipped with a rear steering controller 200 as illustrated in the block diagram of Fig. 5, for controlling the rear steering actuator. The rear steering controller 200 is primarily constituted by a computer 208 which incorporates a central processing unit (CPU) 202, a read-only memory (ROM) 204 and a random-access memory (RAM) 206.

The rear steering controller 200 is adapted to receive output signals of a vehicle speed sensor 210, a steering angle sensor 212 and a yaw rate sensor 214, and output signals of the rotary and axial position sensors 110, 112 which have been described. The output signal of the vehicle speed sensor 210 represents a running speed V of the vehicle. The output signal of the steering angle sensor 212 represents an angle $\theta$ of rotation of a steering wheel by the vehicle operator. The rotation angle $\theta$ of the steering wheel determines a steering angle $\delta f$ of the front wheels. The output signal of the yaw rate sensor 214 represents an actual yaw rate $\gamma$ of the vehicle. The controller 200 is adapted to control the motor 64 of the rear steering actuator 50 which has been described. More specifically described, the CPU 202 of the controller 200 operates on the basis of the input signals from the sensors indicated above, to control the motor 64 according control programs stored in the ROM 202, while utilizing a temporary data storage function of the RAM 206.

The control programs include a rear steering angle control routine as illustrated in the flow chart of Fig. 6. This routine will be described.

The rear steering angle control routine is initiated with step S1 in which the controller 200 reads the output signals of the sensors 210, 212, 214, 110 representative of the vehicle speed V, actual front wheel steering angle $\delta f$, actual yaw rate $\gamma$ and actual rear wheel steering angle $\delta r$. As indicated above, the actual front wheel steering angle $\delta f$ is determined by the rotation angle $\theta$ of the steering wheel, while the actual steering angle $\delta r$ of the rear wheels 12 is determined on the basis of the output signal of the rotary position sensor 110.

Step S1 is followed by step S2 in which a desired or target value $\gamma^*$ of the yaw rate $\gamma$ of the vehicle is determined on the basis of the vehicle speed V and the actual front wheel steering angle $\delta f$, on the assumption that the vehicle is turning along a circular arc at a predetermined constant speed. In this respect, it is noted that a vehicle turning along a curve may be considered to turn along a circular arc at each instantaneous moment. For example, the target yaw rate $\gamma^*$ is calculated, according to a predetermined relationship between the target yaw rate $\gamma^*$ and the vehicle speed V and front steering angle $\delta f$. The relationship may take the form of a functional equation $\gamma^* = f (V, \delta f)$, or a corresponding table or data map representative of the predetermined relationship. The functional equation, table or data map is stored in the ROM 204. The target yaw rate $\gamma^*$ is determined at a predetermined interval corresponding to the cycle time of the present routine.

Then, the control flow goes to step S3 in which a yaw rate error $\Delta\gamma$ is calculated by subtracting the actual yaw rate $\gamma$ from the target value $\gamma^*$. Step S3 is followed by step S4 in which a desired or target amount of change $\Delta\delta r$ of the rear steering angle $\delta r$ is determined on the basis of the calculated yaw rate error $\Delta\gamma$. For example, the target amount of change $\Delta\delta r$ is calculated according to a predetermined relationship between $\Delta\delta r$ and $\Delta\gamma$, in the form of a functional equation $\Delta\delta r = g(\Delta\gamma)$, table or data map stored in the ROM 204. The target amount of change $\Delta\delta r$ is obtained in each cycle of execution of the routine. Then, the control flow goes to step S5 in which a drive signal necessary to change the actual rear steering angle $\delta r$ by the determined amount of change $\Delta\delta r$ is applied to the motor 64 of the rear steering actuator 50, so that the actual rear steering angle $\delta r$ establishes the desired yaw rate $\gamma^*$ of the vehicle. Thus, one cycle of execution of the rear steering angle control routine of Fig. 6 is terminated. The routine is repeatedly executed with the predetermined cycle time.

While the present invention has been described in detail in its presently preferred embodiment, it is to be understood that the invention is not limited to the details of the illustrated embodiment, but may be embodied with various changes, modifications and improvements, which may occur to those skilled in the art in the light of the foregoing teachings, without departing from the scope of the following claims.

## Claims

1. An automotive vehicle having a differential gear (10) for distributing a drive torque of an engine to left and right rear wheels (12), and a rear steering device including a rear steering mechanism (130-136) for changing a steering angle of said left and right wheels and a rear steering actuator (50) for operating said rear steering mechanism, said rear steering actuator (50) being disposed in a portion of a space between an underbody (13) of the vehicle and said differential gear, which portion is spaced frontwards away from a vertical plane which extends in a lateral direction of the vehicle and which passes a rear end of said differential gear, **characterized in that**

   a center of said rear steering actuator (50) is offset with respect to said differential gear in a lateral direction of the vehicle such that a casing (52) of said rear steering actuator does not overlap with said differential gear in said lateral direction.

2. An automotive vehicle according to claim 1, wherein said rear steering actuator (50) comprises:

   a motor (64) having a rotating member (66);
   an axially movable drive shaft (60); and
   a motion converting mechanism (78) for converting a rotary motion of said rotating member of said motor into a linear motion of said drive shaft,

   and wherein said rotating member (66), said drive shaft (60) and said motion converting mechanism (78) are disposed coaxially with each other and rotatable about a common axis, said rear steering actuator (50) being disposed such that said common axis extends in said lateral direction of the vehicle.

3. An automotive vehicle according to claim 1 or 2, wherein said portion of said space in which said rear steering actuator (50) is disposed is located between said vertical plane and another vertical plane which extends in said lateral direction of the vehicle and which passes a front end of said differential gear (10).

4. An automotive vehicle according to any one of claims 1-3, further comprising a rear suspension mechanism, and a sub-frame (30) which is separate from and attached to said underbody (30) and to which said differential gear (10) and said rear suspension mechanism are attached, and wherein said sub frame includes a front cross member (32) which is located at a position corresponding to a front portion of said differential gear, said rear steering actuator (50) being attached to said cross member.

5. An automotive vehicle according to claim 4, wherein said rear steering actuator (50) comprises:

   a motor (64) having a rotating member (66);
   an axially movable drive shaft (60); and
   a motion converting mechanism (78) for converting a rotary motion of said rotating member of said motor into a linear motion of said drive shaft,

   and wherein said rotating member (66), said drive shaft (60) and said motion converting mechanism (78) are disposed coaxially with each other and rotatable about a common axis,
   and wherein said rear steering actuator (50), said underbody (13), said sub-frame (30) and said rear suspension member being positioned relative to each other so as to permit said rear steering actuator to be dismounted from the vehicle, without removal of said differential gear and said sub-frame from said vehicle, by moving said actuator in said lateral direction of the vehicle through a space between said underbody and said-sub frame, after removal of said actuator from said sub-frame.

6. An automotive vehicle according to any one of claims 1-5, wherein said rear steering actuator (50) comprises:

   (a) a hollow cylindrical casing (52);
   (b) an axially movable drive shaft (60) disposed coaxially with said hollow cylindrical casing so as to extend therethrough;
   (c) a motor (64) coaxially disposed within said hollow cylindrical casing, and including a hollow rotating member (66) which has a center bore through which said drive shaft coaxially extends; and

   (d) a motion converting mechanism (78) coaxially disposed within said hollow cylindrical casing, for converting a rotary motion of said rotating member into a linear motion of said drive shaft.

7. An automotive vehicle according to claim 6, wherein said rear steering actuator (50) further comprises a speed reducing device (90) interposed between said motor (64) and said motion converting mechanism (78) in an axial direction of said drive shaft (60), for reducing a speed of said rotary motion of said rotating member (66) when said rotary motion is transmitted to said motion converting mechanism.

8. An automotive vehicle according to claim 6 or 7, wherein said motor (64) comprises a rotor as said rotating member, and a stator disposed coaxially with said rotor, said drive shaft (60) extending coaxially through said rotor and stator.

9. An automotive vehicle according to any one of claims 6-8, wherein said motion converting mechanism (78) comprises (i) an external thread (80) formed coaxially with said drive shaft (60), and (ii) a nut (82) which is rotatably and axially immovably supported by and within said hollow cylindrical casing (52) and which engages said external thread and is coaxially connected to said rotating member (66).

10. An automotive vehicle according to any one of claims 7-9, wherein said speed reducing device (90) comprises at least one planetary gear speed reducer (92, 94) each of which includes a centrally disposed sun gear (100), at least three planetary gears (104) which are disposed outwardly of said sun gear and which engage said sun gear, and a carrier (106) which supports said at least three planetary gears such that each of said planetary gears is rotatable about an axis thereof while said planetary gears maintain a predetermined relative position in a circumferential direction of said carrier, and wherein said rotating member (66) is coaxially connected to said sun gear (100) while said motion converting mechanism (78) is coaxially connected to said carrier (106).

11. An automotive vehicle according to claim 10, wherein said at least one planetary gear speed reducer consists of two planetary gear speed reducers (92, 94) which are connected in series with each other, said two planetary gear speed reducers consisting of an input side speed reducer (92) whose sun gear (100) receives said rotary motion of said rotating member (66) of said motor (64), and an output side speed reducer (94) whose sun gear (100) receives a rotary motion of said carrier (106) of said input side speed reducer, a rotary motion of said carrier (106) of said output side speed reducer being transmitted to said motion converting mechanism (78).

**Patentansprüche**

1. Kraftfahrzeug mit einem Differentialgetriebe (10) zum Verteilen eines Antriebsdrehmoments einer Brennkraftmaschine auf linke und rechte Hinterräder (12), und einer Hecksteuervorrichtung, die einen Hecksteuermechanismus (130-136) zum Ändern eines Lenkwinkels der linken und rechten Räder und einen Hecksteueraktuator (50) zum Betätigen des Hecksteuermechanismus umfaßt, wobei der Hecksteueraktuator (50) in einem Abschnitt eines Raums zwischen einem Unterboden (13) des Fahrzeugs und dem Differentialgetriebe angeordnet ist, wobei der Abschnitt nach vorne von einer vertikalen Ebene weg beabstandet ist, die sich in einer Querrichtung des Fahrzeugs erstreckt und die ein hinteres Ende des Differentialgetriebes passiert, **dadurch gekennzeichnet,**

   daß ein Zentrum des Hecksteueraktuators (50) bezüglich des Differentialgetriebes in einer Querrichtung des Fahrzeugs derart versetzt ist, daß ein Gehäuse (52) des Hecksteueraktuators nicht mit dem Differentialgetriebe in der Querrichtung überlappt.

2. Kraftfahrzeug nach Anspruch 1, worin der Hecksteueraktuator (50) aufweist:

   einen Motor (64) mit einem Rotationselement (66);
   einen axial bewegbaren Antriebsschaft (60); und
   einen Bewegungsumwandlungsmechanismus (78) zum Umwandeln einer Rotationsbewegung des Rotationselements des Motors in eine lineare Bewegung des Antriebsschafts,

   und wobei das Rotationselement (66), der Antriebsschaft (60) und der Bewegungsumwandlungsmechanismus (78) koaxial zueinander und um eine gemeinsame Achse drehbar angeordnet sind, wobei der Hecksteueraktuator (50) derart angeordnet ist, daß sich die gemeinsame Achse in der Querrichtung des Fahrzeugs erstreckt.

3. Kraftfahrzeug nach einem der Ansprüche 1 oder 2, worin der Abschnitt des Raums, in dem der Hecksteueraktuator (50) angeordnet ist, zwischen der vertikalen Ebene und einer weiteren vertikalen Ebene angeordnet ist, die sich in der Querrichtung des Fahrzeugs erstreckt und ein vorderes Ende des Differentialgetriebes (10) passiert.

4. Kraftfahrzeug nach einem der Ansprüche 1-3, das ferner einen Heckaufhängungsmechanismus und einen Unterrahmen (30) hat, der verschieden zu dem Unterboden (30) ist und an diesem angebracht ist, und an dem das Differentialgetriebe (10) und der Heckaufhängungsmechanismus angebracht sind, und wobei der Unterrahmen ein vorderes Querelement (32) aufweist, das bei einer Position entsprechend einem vorderen Abschnitt des Differentialgetriebes angeordnet ist, wobei der Hecksteueraktuator (50) an dem Querelement angebracht ist.

5. Kraftfahrzeug nach Anspruch 4, worin der Hecksteueraktuator (50) aufweist:

   einen Motor (64) mit einem Rotationselement (66);
   einen axial bewegbaren Antriebsschaft (60); und
   einen Bewegungsumwandlungsmechanismus (78) zum Umwandeln einer Rotationsbewegung des Rotationselements des Motors in eine lineare Bewegung des Antriebsschafts,

   und wobei das Rotationselement (66), der Antriebsschaft (60) und der Bewegungsumwandlungsmechanismus (78) koaxial zueinander und um eine gemeinsame Achse drehbar angeordnet sind,

   und wobei der Hecksteueraktuator (50), der Unterboden (13), der Unterrahmen (30) und der Heckaufhängungsmechanismus derart relativ zueinander angeordnet sind, um zuzulassen, daß der Hecksteueraktuator, ohne das Differentialgetriebe und den Unterrahmen von dem Fahrzeug zu entfernen, von dem Fahrzeug demontiert wird, indem der Aktuator in der Querrichtung des Fahrzeugs durch einen Raum zwischen dem Unterboden und dem Unterrahmen bewegt wird, nachdem der Aktuator von dem Unterrahmen entfernt worden ist.

6. Kraftfahrzeug nach einem der Ansprüche 1-5, worin der Hecksteueraktuator (50) aufweist:

   (a) ein hohles zylinderförmiges Gehäuse (52);
   (b) einen axial bewegbaren Antriebsschaft (60), der koaxial zu dem hohlen zylinderförmigen Gehäuse derart angeordnet ist, daß er sich durch dieses hindurch erstreckt;
   (c) einen Motor (64), der koaxial innerhalb des hohlen zylinderförmigen Gehäuses angeordnet ist, und der ein hohles Rotationselement (66) aufweist, das eine Mittelbohrung hat, durch welche sich der Antriebsschaft koaxial erstreckt; und
   (d) einen Bewegungsumwandlungsmechanismus (78), der koaxial innerhalb des hohlen zylinderförmigen Gehäuses angeordnet ist, um eine Rotationsbewegung des Rotationselements in eine lineare Bewegung des Antriebsschafts umzuwandeln.

7. Kraftfahrzeug nach Anspruch 6, worin der Hecksteueraktuator (50) ferner eine Geschwindigkeitsverringerungsvorrichtung (90) aufweist, die zwischen dem Motor (64) und dem Bewegungsumwandlungsmechanismus (78) in einer axialen Richtung des Antriebsschafts (60) angeordnet ist, um eine Geschwindigkeit der Rotationsbewegung des Rotationselements (66) zu verringern, wenn die Rotationsbewegung an den Bewegungsumwandlungsmechanismus übertragen wird.

8. Kraftfahrzeug nach Anspruch 6 oder 7, worin der Motor (64) einen Rotor als das Rotationselement und einen koaxial zu dem Rotor angeordneten Stator aufweist, wobei sich der Antriebsschaft (60) koaxial durch den Rotor und den Stator erstreckt.

9. Kraftfahrzeug nach einem der Ansprüche 6-8, worin der Bewegungsumwandlungsmechanismus (78) aufweist: (i) ein Außengewinde (80), das koaxial zu dem Antriebsschaft (60) ausgebildet ist, und (ii) eine Mutter (82), die von und innerhalb des hohlen zylinderförmigen Gehäuses (52) drehbar und axial unbeweglich gehalten wird, und die mit dem Außengewinde in Eingriff steht und koaxial mit dem Rotationselement (66) verbunden ist.

10. Fahrzeug nach einem der Ansprüche 7-9, worin die Geschwindigkeitsverringerungsvorrichtung (90) zumindest ein Planetenradreduktionsgetriebe (92,94) aufweist, von denen jedes ein zentral angeordnetes Sonnenrad (100), zumindest drei Planetenräder (104), welche außen an dem Sonnenrad angeordnet sind und mit dem Sonnenrad in Eingriff stehen, und einen Träger (106) umfaßt, der die zumindest drei Planetenräder derart hält, daß jedes der Planetenräder um seine Achse drehbar ist, während die Planetenräder eine vorbestimmte relative Position in einer Umfangsrichtung des Trägers beibehalten, und wobei das Rotationselement (66) koaxial mit dem Sonnenrad (100) verbunden ist, während der Bewegungsumwandlungsmechanismus (78) koaxial mit dem Träger (106) verbunden ist.

11. Kraftfahrzeug nach Anspruch 10, worin das zumindest eine Planetenradreduktionsgetriebe aus zwei Planetenradreduktionsgetrieben (92,94) besteht, die miteinander in Reihe geschaltet sind, wobei die Planetenradreduktionsgetriebe aus einem eingangsseitigen Reduktionsgetriebe (92), dessen Sonnenrad (100) die Rotationsbewegung des Rotationselements (66) des Motors (64) aufnimmt, und einem ausgangsseitigen Reduktionsgetriebe (94) besteht, dessen Sonnenrad (100) eine Rotationsbewegung des Trägers (106) des eingangsseitigen Reduktionsgetriebes aufnimmt, wobei eine Rotationsbewegung des Trägers (106) des ausgangsseitigen Reduktionsgetriebes an den Bewegungsumwandlungsmechanismus (78) übertragen wird.

## Revendications

1. Véhicule automobile comportant un différentiel (10) pour distribuer un couple d'entraînement d'un moteur à des roues arrière gauche et droite (12) et un dispositif de direction arrière incluant un mécanisme de direction arrière (130 à 136) pour changer un angle de direction desdites roues gauche et droite et un organe de commande de direction arrière (50) pour mettre en oeuvre ledit mécanisme de direction arrière, ledit organe de commande de direction arrière (50) étant disposé dans une partie d'un espace situé entre un dessous de carrosserie (13) du véhicule et ledit différentiel, laquelle partie est espacée vers l'avant d'un plan vertical qui s'étend dans une direction latérale du véhicule et qui passe devant une extrémité arrière dudit différentiel, caractérisé en ce que

   un centre dudit organe de commande de direction arrière (50) est décalé par rapport audit différentiel dans une direction latérale du véhicule d'une manière telle qu'un boîtier (52) dudit organe de commande de direction arrière ne chevauche pas ledit différentiel dans ladite direction latérale.

2. Véhicule automobile selon la revendication 1, dans lequel ledit organe de commande de direction arrière (50) comprend :

   un moteur (64) comportant un élément rotatif (66) ;
   un arbre d'entraînement axialement mobile (60) ; et
   un moyen de conversion de mouvement (78) pour convertir un mouvement rotatif dudit élément rotatif dudit moteur en un mouvement linéaire dudit arbre d'entraînement,

   et dans lequel ledit élément rotatif (66), ledit arbre d'entraînement (60) et ledit mécanisme de conversion de mouvement (78) sont disposés mutuellement coaxialement et avec faculté de rotation autour d'un axe commun, ledit organe de commande de direction arrière (50) étant disposé d'une manière telle que ledit axe commun s'étend dans ladite direction latérale du véhicule.

3. Véhicule automobile selon la revendication 1 ou 2, dans lequel ladite partie dudit espace, dans lequel ledit organe de commande de direction arrière (50) est disposé, est située entre ledit plan vertical et un autre plan vertical qui s'étend dans ladite direction latérale du véhicule et qui passe devant une extrémité avant dudit différentiel (10).

4. Véhicule automobile selon l'une quelconque des revendications 1 à 3, comprenant en outre un mécanisme de suspension arrière et un sous-châssis (30) qui est séparé dudit dessous de carrosserie (30) et est fixé à celui-ci et auquel ledit différentiel (10) et ledit mécanisme de suspension arrière sont fixés, et dans lequel ledit sous-châssis inclut un élément transversal avant (32) qui est situé à une position correspondant à une partie avant dudit différentiel, ledit organe de commande de direction arrière (50) étant fixé audit élément transversal.

5. Véhicule automobile selon la revendication 4, dans lequel ledit organe de commande de direction arrière (50) comprend :

   un moteur (64) comportant un élément rotatif (66) ;
   un arbre d'entraînement axialement mobile (60) ; et
   un mécanisme de conversion de mouvement (78) pour convertir un mouvement rotatif dudit élément rotatif dudit moteur en un mouvement linéaire dudit arbre d'entraînement,

   et dans lequel ledit élément rotatif (66), ledit arbre d'entraînement (60) et ledit mécanisme de conversion de mouvement (78) sont disposés mutuellement coaxialement et peuvent tourner autour d'un axe commun,
   et dans lequel ledit organe de commande de direction arrière (50), ledit dessous de carrosserie (13), ledit sous-châssis (30) et ledit élément de suspension arrière sont positionnés l'un par rapport à l'autre de façon à permettre audit organe de commande de direction arrière d'être démonté du véhicule, sans enlèvement dudit différentiel et dudit sous-châssis dudit véhicule par déplacement dudit organe de commande dans ladite direction latérale du véhicule à travers un espace situé entre ledit dessous de carrosserie et ledit sous-châssis, après enlèvement dudit organe de commande dudit sous-châssis.

6. Véhicule automobile selon l'une quelconque des revendications 1 à 5, dans lequel ledit organe de commande de direction arrière (50) comprend :

   (a) un boîtier cylindrique creux (52) ;
   (b) un arbre d'entraînement axialement mobile (60) disposé coaxialement avec ledit boîtier cylindrique creux de façon à s'étendre à travers celui-ci ;
   (c) un moteur (64) disposé coaxialement à l'intérieur dudit boîtier cylindrique creux et incluant un élément rotatif creux (66) qui comporte un alésage central à travers lequel ledit arbre d'entraînement s'étend coaxialement ; et
   (d) un mécanisme de conversion de mouvement (78) disposé coaxialement à l'intérieur dudit boîtier cylindrique creux pour convertir un mouvement rotatif dudit élément rotatif en un mouvement linéaire dudit arbre d'entraînement.

7. Véhicule automobile selon la revendication 6, dans lequel ledit organe de commande de direction arrière (50) comprend en outre un dispositif démultiplicateur (90) interposé entre ledit moteur (64) et ledit mécanisme de conversion de mouvement (78) dans une direction axiale dudit arbre d'entraînement (60) pour réduire une vitesse dudit mouvement rotatif dudit élément rotatif (66) lorsque ledit mouvement rotatif est transmis audit moyen de conversion de mouvement.

8. Véhicule automobile selon la revendication 6 ou 7, dans lequel ledit moteur (64) comprend un rotor en tant que ledit élément rotatif et un stator disposé coaxialement avec ledit rotor, ledit arbre d'entraînement (60) s'étendant coaxialement à travers lesdits rotor et stator.

9. Véhicule automobile selon l'une quelconque des revendications 6 à 8, dans lequel ledit mécanisme de conversion de mouvement (78) comprend (i) un filetage externe (80) formé coaxialement avec ledit arbre d'entraînement (60), (ii) un écrou (82) qui est supporté avec faculté de rotation et axialement de manière fixe par ledit boîtier cylindrique creux (52) et à l'intérieur de celui-ci et qui met en prise ledit filetage externe et est coaxialement connecté audit élément rotatif (66).

10. Véhicule automobile selon l'une quelconque des revendications 7 à 9, dans lequel le dispositif démultiplicateur (90) comprend au moins un démultiplicateur à train épicycloïdal (92, 94) dont chacun inclut un engrenage planétaire (100) disposé au centre, au moins trois engrenages épicycloïdaux (104) qui sont disposés vers l'extérieur dudit engrenage planétaire et qui s'engrènent avec ledit engrenage planétaire, et un support (106) qui supporte lesdits au moins trois engrenages épicycloïdaux d'une manière telle que chacun desdits engrenages épicycloïdaux peut tourner autour de son axe tandis que lesdits engrenages épicycloïdaux maintiennent une position relative prédéterminée dans une direction circonférentielle dudit support et dans lequel ledit élément rotatif (66) est raccordé coaxialement audit engrenage planétaire (100) tandis que ledit moyen de conversion de mouvement (78) et raccordé coaxialement audit support (106).

11. Véhicule automobile selon la revendication 10, dans lequel ledit au moins un démultiplicateur à train épicycloïdal est constitué de deux démultiplicateurs à train épicycloïdal (92, 94) qui sont connectés en série l'un à l'autre, lesdits deux démultiplicateurs à train épicycloïdal étant constitués d'un démultiplicateur côté entrée (92) dont l'engrenage planétaire (100) reçoit ledit mouvement rotatif dudit élément rotatif (66) dudit moteur (64) et un démultiplicateur côté sortie (94) dont l'engrenage planétaire (100) reçoit un mouvement rotatif dudit support (106) dudit démultiplicateur côté entrée, un mouvement rotatif dudit support (106) dudit démultiplicateur côté sortie étant transmis audit mécanisme de conversion de mouvement (78).

FIG.1

FIG.2

VEHICLE
FRONT

FIG.3

FIG.4

## FIG.5

VEHICLE SPEED SENSOR `210`

STEERING ANGLE SENSOR `212`

YAW RATE SENSOR `214`

ROTARY POSITION SENSOR `110`

AXIAL POSITION SENSOR `112`

`200`

`208`

CPU `202`

ROM `204`

RAM `206`

REAR STEERING ACTUATOR `50`

## FIG.6

REAR STEERING ANGLE CONTROL ROUTINE

S1 READING V, $\delta_f$, $\gamma$ AND $\delta_r$

S2 $\gamma^* = f(V, \delta_f)$

S3 $\Delta\gamma = \gamma^* - \gamma$

S4 $\Delta\delta_r = g(\Delta\gamma)$

S5 OPERATING REAR STEERING ACTUATOR

RETURN